# EUROPÄISCHE PATENTSCHRIFT

(11) **EP 2 205 140 B1**
(45) Veröffentlichungstag und Bekanntmachung des Hinweises auf die Patenterteilung: **13.09.2017**
(21) Anmeldenummer: 08843871.8
(22) Anmeldetag: 15.10.2008
(51) Int. Cl.: B01D 29/01, B01D 29/11, B01D 29/52, B01D 29/66, B01D 29/70, A47L 15/42, C02F 1/00, D06F 39/10

(54) **WASSERFÜHRENDES HAUSHALTSGERÄT MIT SELBSTREINIGENDEM FILTER**
WATER-GUIDING HOUSEHOLD APPLIANCE COMPRISING A SELF-CLEANING FILTER
APPAREIL MÉNAGER À CIRCULATION D'EAU DOTÉ D'UN FILTRE AUTONETTOYANT

(30) Priorität: 31.10.2007 DE 102007052074
(43) Veröffentlichungstag der Anmeldung: 14.07.2010
(73) Patentinhaber: BSH Hausgeräte GmbH, 81739 München (DE)
(72) Erfinder: WACHINGER, Thomas, 85250 Hohenzell (DE); JERG, Helmut, 89537 Giengen (DE)
(86) Internationale Anmeldenummer: PCT/EP2008/063861
(87) Internationale Veröffentlichungsnummer: WO 2009/056444

(56) Entgegenhaltungen:
- EP-A- 0 752 231
- WO-A-95/32785
- US-A- 3 179 116
- US-A- 5 853 584
- US-A1- 2007 228 309

## Beschreibung

Die Erfindung betrifft ein wasserführendes Haushaltsgerät, insbesondere eine Geschirrspül- oder Waschmaschine, wenigstens aufweisend ein in einem Leitungssystem angeordnetes Filter.
In wasserführenden Haushaltsgeräten, wie beispielsweise Geschirrspülmaschinen, wird während eines Reinigungsvorganges von zu reinigendem Spülgut Spülflotte in einem Leitungssystem umgewälzt, d.h., dass sich Spülflotte in einem im unteren Bereich der Geschirrspülmaschine angeordneten Pumpensumpf sammelt und mittels einer Pumpe durch ein Leitungssystem den Sprüharmen zugeführt wird, die das im Inneren der Geschirrspülmaschine angeordnete Spülgut mit Spülflotte beaufschlagen. Um Verstopfungen des Leitungssystems zu verhindern, ist es bekannt, Schmutzpartikel einer Mindestgröße mittels eines Filters zurückzuhalten. Um einer Verstopfung des Filters durch einen sich bildenden Filterkuchen entgegenzuwirken, sind verschiedene Maßnahmen aus dem Stand der Technik bekannt.
So ist es beispielsweise aus der DE 413 19 14 C2 bekannt, einen im Wesentlichen zylinderförmigen Filter in Drehbewegung zu versetzen und durch die entstehende Zentrifugalkräfte den Filterkuchen abzuschleudern. Ähnliches gilt für die EP 0 752 231 A1.

Aus der WO 2007/017330 A1 hingegen ist es bekannt, einen Filter eine Haushaltsgeschirrspülmaschine dadurch zu reinigen, indem nach Abschluss eines Reinigungsvorganges, in dem Spülflotte umgewälzt wurde und in einer ersten Richtung durch der Filter strömte, die Spülflotte beim Abpumpen in einer zweiten Richtung, die entgegengesetzt zur ersten Richtung verläuft, durch der Filter zu pumpen und so mittels eines Rückspülvorganges zu reinigen.
Ferner ist es aus der DE 10 244 243 A1 bekannt, einen Filter dadurch zu reinigen, dass der Filter mittels einer hierfür vorgesehenen Sprüheinrichtung gereinigt wird.
Die US-A-3,179,116 zeigt einen entlang einer Mantelfläche eines Zylinders helikal ausgebildeten Filter, wobei durch gleichzeitige axiale Stauchung oder Dehnung sämtlicher Gänge der Helix diese ihren axialen Abstand verringern bzw. vergrößern können. Es können so unterschiedliche Reinigungspositionen des Filters eingestellt werden. Dabei verändert sich jedoch auch die axiale Höhe des gesamten Filters, was bei Anordnung etwa im Boden einer Geschirrspülmaschine ungünstig ist, da eine Vergrößerung der Höhe aufgrund des geringen Raums im Boden häufig nicht möglich ist bzw. dann eine Kollision mit einem unteren Geschirrkorb oder einem oberhalb des Filters gelegenen Grobsieb drohen würde. Zudem muß zur gleichzeitigen axialen Stauchung oder Dehnung der gesamten Zylindermantelfläche eine hohe Kraft aufgewendet werden, was die Einwirkung eines großen Wasserdrucks auf ein Diaphragma erforderlich machen würde. Häufig steht ein hinreichend hoher Wasserdruck aber nicht zur Verfügung. Ein eigenes Antriebsorgan würde jedoch einen großen Zusatzaufwand bewirken.

Ähnliches gilt für die WO 95/32785 A1: Auch hier ist nur eine Gesamtbeweglichkeit des Filters in axialer Richtung gezeigt, wobei gegen eine axiale Druckfeder angearbeitet werden muss. Wieder sind Kraftaufwand hierfür und in axialer Richtung benötigter Raum erheblich, was zu den o. g. Nachteilen führt.

Gemäß der US-A-5,853,584 muß auch hier eine gesamte Sieb- oder Filtereinrichtung bewegt werden, sogar um eine horizontale Achse gedreht werden, was ebenfalls einen großen Bauraum und große einwirkende Kräfte erfordert. Zudem besteht die Gefahr, dass sich Verschmutzungen während der Drehung im Gehäuse ansammeln und daher auf die Dauer für eine zusätzliche Erschwernis bei der Drehbewegung sorgen. Um dem entgegenzuwirken, müssen die Spalte zwischen feststehenden und rotierbaren Teilen sehr eng ausgeführt sein, was nur mit einem formstabilen, massiven Gehäuse und hohem Gewicht ermöglicht sein kann.

Die aus dem Stand der Technik bekannten Lösungen weisen somit einen komplizierten und teilweise großen Bauraum erfordernden Aufbau auf. Es ist daher Aufgabe der Erfindung, ein wasserführendes Haushaltsgerät mit einem Filter bereitzustellen, das sich durch einen einfachen Aufbau und eine zuverlässige Funktionsweise auszeichnet.

Die Aufgabe der Erfindung löst dieses Problem durch ein wasserführendes Haushaltsgerät mit den Merkmalen des Anspruchs 1 und einen Filter mit den Merkmalen des Anspruchs 12. Hinsichtlich vorteilhafter Ausgestaltungen und Merkmale wird auf die weiteren Ansprüche 2 bis 11 verwiesen.
Dabei kann es sich bei dem Leitungssystem im Fall einer Geschirrspülmaschine um eine Leitung handeln, die der Versorgung von im Sprühraum einer Geschirrspülmaschine angeordneten Sprüharm mit Spülflotte dient. Hierzu sind die Sprüharme über Leitungen mit einer Pumpe verbunden, die die sich im Bodenbereich eines im Spülbehälters angeordneten Pumpensumpf sammelnde Spülflotte ansaugt und während eines Reinigungsvorgangs von Spülgut in einem geschlossenen Kreislauf umwälzt.
Es wird durch die Erfindung ein wasserführendes Haushaltsgerät mit einem Filter bereitgestellt, der sich auf überraschend einfache Weise selbst reinigen lässt, ohne dass hierzu besondere Einrichtungen notwendig wären. Dies wird erreicht, indem der Filter zwei Positionen einnehmen kann, wobei in einer ersten Position die Filterwirkung des Filters gegeben ist und in einer zweiten Position, einer Reinigungsposition, der Filter gereinigt werden kann. Hierfür sind die Filterelemente schwenkbar an einem Grundkörper angeordnet. Der Filter ist mit mehreren einzelnen Filterelementen aufgebaut.
In einer ersten bevorzugten Ausführungsform ist vorgesehen, dass die Filterelemente durch Strömungsumkehr einer durch den Filter strömenden Flüssigkeit von der ersten Filterposition in die zweite Reinigungsposition und/oder umgekehrt bringbar ist. Es kann also durch eine Strömungsumkehr ein Wechsel von der ersten Filterposition in die zweite Reinigungsposition bewirkt werden oder ein Wechsel von der zweiten Reinigungsposition in die erste Filterposition sowie ein Wechsel in beiden Richtungen möglich sein. Dabei kann es sich beispielsweise bei der Strömungsumkehr um eine beim Abpumpvorgang auftretende Strömungsumkehrung gegenüber der Strömungsrichtung beim Umwälzen der Spülflotte während eines Reinigungsvorganges handeln. Es kann vorgesehen sein, dass die durch den Filter strömende Flüssigkeit rotiert, beispielsweise im Uhrzeigersinn, durch die die Filterelemente in die erste Filterposition gebracht werden, und beim Abpumpen der Spülflotte entgegen dem Uhrzeigersinn rotiert.
Um die durch die Strömungsumkehr bedingte Bewegung der Filterelemente zwischen der ersten Filterposition und der zweiten Reinigungsposition zu veranlassen kann vorgesehen sein, dass die Filterelemente wenigstens einen Anströmkeil aufweisen, der bei Vorliegen einer entsprechend gerichteten Strömung bewirkt, dass das Filterelement von einer ersten Filterposition in die zweite Reinigungsposition sich bewegt, bzw. umgekehrt.
Um die umgekehrte Bewegung der Filterelemente zu veranlassen, können entsprechend angeordnete weitere Anströmkeile vorgesehen sein. Vorzugsweise jedoch ist vorgesehen, dass die Filterelemente in einer entsprechenden Richtung federnd vorgespannt sind, so dass zum Beispiel, wenn keine beim Abpumpvorgang auftretende, entgegen dem Uhrzeigersinn rotierende Strömung vorliegt, die Filterelemente selbsttätig wieder in die erste Filterposition zurückkehren.
In einer bevorzugten zweiten Ausführungsform der Erfindung ist vorgesehen, dass ein Aktuator vorgesehen ist, der in Wirkverbindung mit den Filterelementen steht. Dies erlaubt es, durch gezieltes Ansteuern des Aktuators die Filterelemente zu veranlassen, von der ersten Filterposition in die zweite Reinigungsposition zu wechseln oder umgekehrt. Es kann also z.B. ein Wechsel von der ersten Filterposition in die zweite Reinigungsposition bewirkt werden oder ein Wechsel von der zweiten Reinigungsposition in die erste Filterposition. Ferner kann ein Wechsel in beiden Richtungen möglich sein. Dabei kann der Aktuator eingesetzt werden, um beispielsweise das Filterelement aus der zweiten Reinigungsposition in die erste Filterposition zu bewegen, während die Bewegung aus der ersten Filterposition in die zweite Reinigungsposition durch die an den Filterelementen angreifende Strömung bewirkt wird oder die Filterelemente sind federnd vorgespannt, um diese Bewegung zu bewirken.
Dabei ist bevorzugt vorgesehen, dass der Aktuator einen Memorydraht aufweist. Somit weist der Aktuator einen einfachen, zuverlässig funktionierenden Aufbau auf. In einer bevorzugten Ausführungsform ist vorgesehen, dass der Memorydraht ringförmig ausgebildet ist. D. h., dass der Memorydraht sich im aktivierten Zustand verkürzt und damit der Radius des ringförmig ausgebildeten Memorydrahtes verkleinert. Dabei steht der ringförmige Memorydraht in Wirkverbindung mit den Filterelementen und bewirkt so einen Wechsel von einer ersten Filterposition in die zweite Reinigungsposition und/oder umgekehrt.
In einer dritten, bevorzugten Ausführungsform der Erfindung ist vorgesehen, dass die Filterelemente von der ersten Filterposition in die zweite Reinigungsposition und/oder umgekehrt durch eine Bewegung des Filters von einer ersten Position in die zweite Position und/oder umgekehrt bringbar sind. Dies erlaubt einen besonders einfachen Aufbau, da nicht die beweglich an dem Filter angeordneten Elemente bewegt werden sondern der Filter selbst. Dabei kann ein Wechsel von der ersten Filterposition in die zweite Reinigungsposition oder ein Wechsel von der zweiten Reinigungsposition in die erste Filterposition bewirkt werden. Ferner kann ein Wechsel in beiden Richtungen möglich sein.

Hierbei ist bevorzugt vorgesehen, dass die Bewegung eine Drehbewegung ist. Hierbei muss es sich jedoch nicht um eine vollständige Drehbewegung des Filters mit mehreren Drehungen um die eigene Achse handeln, sondern es wird der Filter nur um einen bestimmten Winkel gedreht, der kleiner als 360° ist. Es ist jedoch auch möglich, den Filter derart auszubilden, dass mittels einer linearen Bewegung die Filterelemente von der ersten Filterposition in eine zweite Reinigungsposition bringbar sind und/oder umgekehrt.

Vorzugsweise ist dabei vorgesehen, dass durch die Drehbewegung eine auf die Filterelemente wirkende Zentrifugalkraft erzeugt wird. Somit wird ein besonders einfacher Aufbau erreicht, der keine Anlenkung der Filterelemente an dem Filter erfordert. Hierzu können an entsprechenden Stellen Gewichte an den Filterelementen angeordnet sein, so dass durch eine entsprechende Bewegung ein Wechsel der Position der Filterelemente aus einer ersten Filterposition in eine zweite Reinigungsposition veranlasst wird bzw. umgekehrt.

Ferner ist erfindungsgemäß vorgesehen, dass der Filter im wesentlichen zylindermantelförmig ausgebildet ist. Dabei ist vorgesehen, dass ein Filterelement einen Abschnitt des im wesentlichen zylindermantelförmig ausgebildeten Filters bildet. Es ist ferner vorgesehen, dass eine Mehrzahl von Filterelementen, insbesondere von baugleichen Filterelementen, vorgesehen sind, die eine im wesentlichen zylindermantelförmige Filterfläche bilden.

Ferner gehört zur Erfindung ein Filter für ein erfindungsgemäßes wasserführendes Haushaltsgerät, wie beispielsweise eine Geschirrspül- oder Waschmaschine, der in Anspruch 12 näher spezifiziert ist.

Im folgenden wird die Erfindung anhand einer Erfindung erläutert. Es zeigt:
- Fig. 1: eine schematische Darstellung eines ersten Ausführungsbeispiels eines Filters für ein wasserführendes Haushaltsgerät,
- Fig. 2: eine schematische Darstellung eines zweiten Ausführungsbeispiels eines erfindungsgemäßes Filters für ein wasserführendes Haushaltsgerät
- Fig. 3: in schematischer Darstellung ein drittes Ausführungsbeispiel eines erfindungsgemäßen Filters für ein wasserführendes Haushaltsgerät,
- Fig. 4: eine schematische Darstellung eines Filters für ein wasserführendes Haushaltsgerät in der Filterposition.

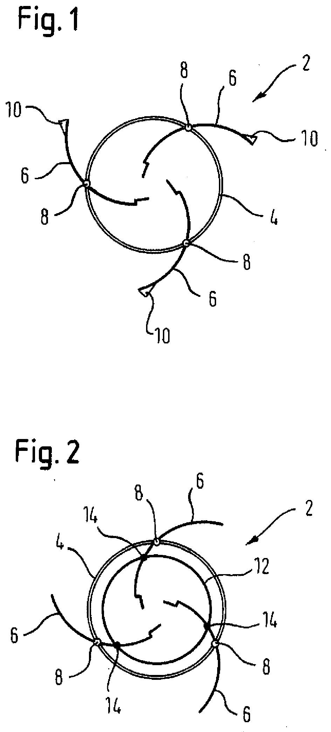

Es wird auf die Figuren 1 bis 4 Bezug genommen.

Ein wasserführendes Haushaltsgerät (nicht dargestellt), wie beispielsweise eine Geschirrspülmaschine, weist ein Leitungssystem (nicht dargestellt) auf, mit dem Spülflotte in in einem Behandlungsraum einer Geschirrspülmaschine angeordnete Sprüharme (nicht dargestellt) zugeführt werden kann. Die Sprüharme sind mittels einer Leitung (nicht dargestellt) mit einer im Bodenbereich des Aufnahmeraumes des wasserführenden Haushaltsgeräts angeordneten Sumpf (nicht dargestellt) verbunden, wobei eine Pumpe (nicht dargestellt) vorgesehen ist, um die Spülflotte von dem Sumpf durch die Leitung zu den Sprüharmen zu fördern. Um Schmutzpartikel mit einer Mindestgröße zurückzuhalten, damit sie beispielsweise die Austrittsöffnungen von Sprüharmen nicht verstopfen, ist im Sumpf ein Filter 2 angeordnet.

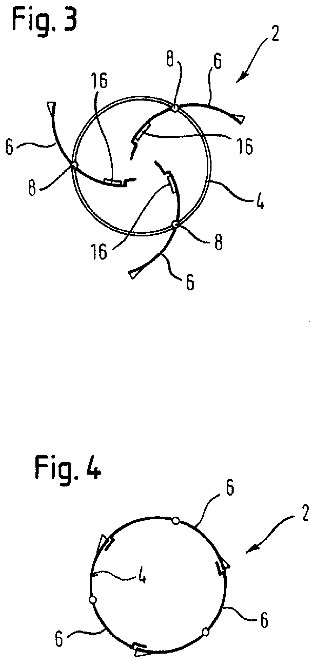

Der Filter 2 weist eine im wesentlichen zylindrische Grundform auf mit einem Grundkörper 4, an dem drei Filterelemente 6 an Drehpunkten 8 schwenkbar befestigt sind. Dabei sind die drei Filterelemente 6 derart ausgebildet, dass sie in der ersten Filterposition (vgl. Figur 4) eine zylinderförmige Mantelfläche bilden, durch die die Spülflotte hindurchtritt, beispielsweise wenn die Spülflotte während eines Reinigungsvorgangs umgewälzt und dem Sprüharm zugeführt wird. Dabei ist das wasserführende Haushaltsgerät, wie beispielsweise eine Geschirrspülmaschine, derart ausgebildet, dass in diesem Betriebszustand die strömende Flüssigkeit eine Rotation im Uhrzeigersinn aufweist.

Zum Reinigen des Filters 2 hingegen erfolgt eine Strömungsumkehr, d. h., der Filter 2 wird mit einer Strömung angeströmt, die eine Rotation entgegen dem Uhrzeigersinn aufweist. Dabei bewirken an den drei Filterelementen 6 angeordnete Anströmkeile, dass durch die Strömung in dieser Richtung die Filterelemente 6 in eine zweite Position, die Reinigungsposition, verschwenkt werden (vgl. Figur 1), in der sich ein Filterkuchen von der Oberfläche der Filterelemente 6 lösen kann und beispielsweise mittels einer Laugenpumpe in ein hausseitiges Abwasserentsorgungssystem entsorgt werden kann.

Um eine Rückkehr der drei Filterelemente 6 aus der zweiten Reinigungsposition in die erste Filterposition zu bewirken, können die Anströmkeile derart ausgebildet sein, dass sie bei einer im Uhrzeigersinn strömenden Flüssigkeit entsprechend von der zweiten Reinigungsposition in die erste Filterposition bewegt werden. Alternativ hierzu können die drei Filterelemente 6 auch federnd vorgespannt gelagert sein, oder es kann hierzu auch ein Aktuator vorgesehen sein.

Bei einem zweiten Ausführungsbeispiel ist vorgesehen, dass die an Drehpunkten 8 drehbar an einem zylinderförmigen Grundkörper 4 befestigten drei Filterelemente 6 zusätzlich an Befestigungspunkten 14 mit einem ringförmig ausgebildeten Memorydraht 12 in Wirkverbindung stehen. Dabei bewirkt eine Reduzierung der Länge des Memorydrahts eine Reduzierung des Durchmessers des ringförmigen Memorydrahtes 12 (vgl. Figur 2), so dass durch die Anlenkung an den Befestigungspunkten die drei Filterelemente 6 von der ersten Filterposition in die zweite Reinigungsposition bewegt werden. Um die Rückkehr der drei Filterelemente 6 aus der zweiten Reinigungsposition in die erste Filterposition zu beschleunigen, können die drei Filterelemente federnd vorgespannt sein, oder es findet ein zweiter Aktuator Verwendung.

In einem dritten Ausführungsbeispiel weisen die drei an dem Grundkörper 4 an den Drehpunkten 8 gehaltenen Filterelemente 6 Gewichte 16 auf, die derart angeordnet sind, dass bei einer Drehbewegung des Grundkörpers 4 um eine Rotationsachse Zentrifugalkräfte erzeugt werden, die bewirken, dass die drei Filterelemente 6 von der ersten Filterposition in die zweite Reinigungsposition bewegt werden. Hierzu kann vorgesehen sein, dass der Grundkörper 4 nicht vollständig drehbar, d.h. für eine Vielzahl von Umdrehungen um die eigene Rotationsachse ausgebildet, ist, sondern lediglich für Drehbewegungen um einen bestimmten Winkel, der kleiner ist als 360°. Um die drei Filterelemente 6 von der zweiten Reinigungsposition in die erste Filterposition zurückzubewegen, kann durch eine entsprechende Drehbewegung des Grundkörpers 4 eine entsprechend gerichtete Zentrifugalkraft erzeugt werden, oder die drei Filterelemente 6 können federnd vorgespannt sein, oder es kann hierzu ein Aktuator Verwendung finden, der mit den drei Filterelementen 6 in Wirkverbindung steht.

### BEZUGSZEICHENLISTE

- 2: Filter
- 4: Grundkörper
- 6: Filterelement
- 8: Drehpunkt
- 10: Anströmkeil
- 12: Memorydraht
- 14: Befestigungspunkt
- 16: Gewicht

## Patentansprüche

1. Wasserführendes Haushaltsgerät, wenigstens aufweisend einen in einem Leitungssystem angeordneten Filter (2), **dadurch gekennzeichnet, dass** der Filter (2) einen Grundkörper (4) mit mehreren Filterelementen (6) aufweist, wobei
• die Filterelemente (6) an Drehpunkten (8) schwenkbar an dem Grundkörper (4) befestigt sind,
• die Filterelemente (6) zwischen einer ersten Filterposition und einer zweiten Reinigungsposition schwenkbar bewegbar angeordnet sind und
• die Filterelemente (6) derart ausgebildet sind, dass sie in der ersten Filterposition eine zylinderförmige Mantelfläche bilden, durch die in dem Leitungssystem umgewälzte Spülflotte hindurchtritt,
und in der zweiten Reinigungsposition aus der Mantelfläche herausschwenken, so dass sich der Filterkuchen von der Oberfläche der Filterelemente (6) lösen kann und beispielsweise mittels einer Laugenpumpe in ein hausseitiges Abwasserentsorgungssystem entsorgt werden kann.

2. Wasserführendes Haushaltsgerät nach einem der vorhergehenden Ansprüche, **dadurch gekennzeichnet, dass** die Filterelemente (6) durch Strömungsumkehr einer durch das Filter (2) strömenden Flüssigkeit von der ersten Filterposition in die zweite Reinigungsposition und/oder umgekehrt bringbar ist.

3. Wasserführendes Haushaltsgerät nach einem der vorhergehenden Ansprüche, **dadurch gekennzeichnet, dass** die Filterelemente (6) wenigstens einen Anströmkeil (10) aufweisen.

4. Wasserführendes Haushaltsgerät nach einem der vorherigen Ansprüche, **dadurch gekennzeichnet, dass** die Filterelemente (6) federnd vorgespannt sind.

5. Wasserführendes Haushaltsgerät nach einem der vorherigen Ansprüche, **dadurch gekennzeichnet, dass** ein Aktuator vorgesehen ist, der in Wirkverbindung mit denFilterelementen (6) steht, derart, dass die Filterelemente (6) von einer ersten Filterposition in die zweite Reinigungsposition und/oder umgekehrt bringbar sind.

6. Wasserführendes Haushaltsgerät nach Anspruch 5, **dadurch gekennzeichnet, dass** der Aktuator einen Memorydraht (12) aufweist.

7. Wasserführendes Haushaltsgerät nach Anspruch 6, **dadurch gekennzeichnet, dass** der Memorydraht (12) ringförmig ausgebildet ist.

8. Wasserführendes Haushaltsgerät nach Anspruch 1, **dadurch gekennzeichnet, dass** die Filterelemente (6) von einer ersten Filterposition in die zweite Reinigungsposition und/oder umgekehrt durch eine Bewegung des Filters (2) von einer ersten Position in einer zweite Position und/oder umgekehrt bringbar sind.

9. Wasserführendes Haushaltsgerät nach Anspruch 8, **dadurch gekennzeichnet, dass** die Bewegung eine Drehbewegung ist.

10. Wasserführendes Haushaltsgerät nach Anspruch 9, **dadurch gekennzeichnet, dass** durch die Drehbewegung eine auf die Filterelemente (6) wirkende Zentrifugalkraft erzeugt wird.

11. Wasserführendes Haushaltsgerät nach einem der vorherigen Ansprüche, **dadurch gekennzeichnet, dass** die Filterelemente, i baugleichsind..

12. Filter (2) für ein Haushaltsgerät nach einem der Ansprüche 1 bis 11, **dadurch gekennzeichnet, dass** der Filter (2) einen Grundkörper (4) mit mehreren Filterelementen (6) aufweist, wobei
• die Filterelemente (6) an Drehpunkten (8) schwenkbar an dem Grundkörper (4) befestigt sind,
• die Filterelemente (6) zwischen einer ersten Filterposition und einer zweiten Reinigungsposition schwenkbar bewegbar angeordnet sind und
• die Filterelemente (6) derart ausgebildet sind, dass sie in der ersten Filterposition eine zylinderförmige Mantelfläche bilden, durch die Spülflotte hindurchtritt, und in der zweiten Reinigungsposition aus der Mantelfläche herausschwenken, so dass sich der Filterkuchen von der Oberfläche der Filterelemente (6) lösen kann und beispielsweise mittels einer Laugenpumpe in ein hausseitiges Abwasserentsorgungssystem entsorgt werden kann.

## Claims

1. Water-guiding household appliance, at least comprising a filter (2) arranged in a line system, **characterised in that** the filter (2) has a base body (4) with a number of filter elements (6), wherein
- the filter elements (6) at the centres of rotation (8) are fastened pivotably to the base body (4),
- the filter elements (6) are arranged in such a way that they can be moved pivotably between a first filter position and a second cleaning position and
- the filter elements (6) are embodied such that in the first filter position they form a cylindrical casing surface, through which the wash liquor circulated in the line system passes,
and in the second cleaning position they pivot out of the casing surface so that the filter cake can detach from the surface of the filter elements (6) and can be disposed of into a domestic wastewater disposal system by means of a drain pump for instance.

2. Water-guiding household appliance according to one of the preceding claims, **characterised in that** the filter elements (6) are able to be moved from the first filter position to the second cleaning position and/or vice versa by means of a flow reversal of a liquid flowing through the filter (2).

3. Water-guiding household appliance according to one of the preceding claims, **characterised in that** the filter elements (6) have at least one inflow wedge (10).

4. Water-guiding household appliance according to one of the preceding claims, **characterised in that** the filter elements (6) are spring-pretensioned.

5. Water-guiding household appliance according to one of the preceding claims, **characterised in that** an actuator is provided, which is actively connected to the filter elements (6) so that the filter elements (6) can be moved from a first filter position to the second cleaning position and/or vice versa.

6. Water-guiding household appliance according to claim 5, **characterised in that** the actuator has a memory wire (12).

7. Water-guiding household appliance according to claim 6, **characterised in that** the memory wire (12) is configured in a ring shape.

8. Water-guiding household appliance according to claim 1, **characterised in that** the filter elements (6) can be moved from a first filter position to the second cleaning position and/or vice versa by a movement of the filter (2) from a first position to a second position and/or vice versa.

9. Water-guiding household appliance according to claim 8, **characterised in that** the movement is a rotational movement.

10. Water-guiding household appliance according to claim 9, **characterised in that** the rotational movement generates a centrifugal force acting on the filter elements (6).

11. Water-guiding household appliance according to one of the preceding claims, **characterised in that** the filter elements (6) are of identical structure.

12. Filter (2) for a household appliance according to one of claims 1 to 11, **characterised in that** the filter (2) has a base body (4) with a number of filter elements (6), wherein
- the filter elements (6) on the centres of rotation (8) are pivotably fastened to the base body (4),
- the filter elements (6) are arranged in such a way that they can be moved pivotably between a first filter position and a second cleaning position and the filter elements (6) are embodied such that in the first filter position they form a cylindrical casing surface, through which the wash liquor passes, and in the second cleaning position they pivot out of the casing surface so that the filter cake can detach from the surface of the filter elements (6) and can be disposed of into a domestic wastewater disposal system by means of a drain pump for instance.

## Revendications

1. Appareil ménager à circulation d'eau, comprenant au moins un filtre (2) disposé dans un système de conduites, **caractérisé en ce que** le filtre (2) présente un corps de base (4) doté de plusieurs éléments filtrants (6),
• les éléments filtrants (6) étant fixés de manière pivotante au corps de base (4) sur des pivots (8),
• les éléments filtrants (6) étant disposés de façon à pouvoir pivoter entre une première position de filtrage et une deuxième position de nettoyage, et
• les éléments filtrants (6) étant réalisés de façon à former dans la première position de filtrage une surface d'enveloppe cylindrique traversée par l'eau de lavage en circulation dans le système de conduites, et à pivoter hors de la surface d'enveloppe dans la deuxième position de nettoyage, de sorte que le gâteau de filtrage puisse se détacher de la surface des éléments filtrants (6) et être évacué, par exemple au moyen d'une pompe à lessive, dans un système d'évacuation des eaux usées, côté bâtiment.

2. Appareil ménager à circulation d'eau selon une des revendications précédentes, **caractérisé en ce que** les éléments filtrants (6) peuvent être amenés par inversion d'écoulement d'un liquide traversant le filtre (2) de la première position de filtrage dans la deuxième position de nettoyage et/ou inversement.

3. Appareil ménager à circulation d'eau selon une des revendications précédentes, **caractérisé en ce que** les éléments filtrants (6) présentent au moins une clavette d'attaque (10).

4. Appareil ménager à circulation d'eau selon une des revendications précédentes, **caractérisé en ce que** les éléments filtrants (6) sont précontraints élastiquement.

5. Appareil ménager à circulation d'eau selon une des revendications précédentes, **caractérisé en ce qu'**il est prévu un actionneur, lequel est en liaison fonctionnelle avec les éléments filtrants (6) de telle sorte que les éléments filtrants (6) puissent être amenés d'une première position de filtrage dans la deuxième position de nettoyage et/ou inversement.

6. Appareil ménager à circulation d'eau selon la revendication 5, **caractérisé en ce que** l'actionneur présente un fil à mémoire de forme (12).

7. Appareil ménager à circulation d'eau selon la revendication 6, **caractérisé en ce que** le fil à mémoire de forme (12) est de forme annulaire.

8. Appareil ménager à circulation d'eau selon la revendication 1, **caractérisé en ce que** les éléments filtrants (6) peuvent être amenés d'une première position de filtrage dans la deuxième position de nettoyage et/ou inversement par un mouvement du filtre (2) d'une première position dans la deuxième position et/ou inversement.

9. Appareil ménager à circulation d'eau selon la revendication 8, **caractérisé en ce que** le mouvement est un mouvement rotatif.

10. Appareil ménager à circulation d'eau selon la revendication 9, **caractérisé en ce que** le mouvement rotatif produit une force centrifuge agissant sur les éléments filtrants (6).

11. Appareil ménager à circulation d'eau selon une des revendications précédentes, **caractérisé en ce que** les éléments filtrants (6) sont construits de façon identique.

12. Filtre (2) pour appareil ménager selon une des revendications 1 à 11, **caractérisé en ce que** le filtre (2) présente un corps de base (4) doté de plusieurs éléments filtrants (6),
• les éléments filtrants (6) étant fixés de manière pivotante au corps de base (4) sur des pivots (8),
• les éléments filtrants (6) étant disposés de façon à pouvoir pivoter entre une première position de filtrage et une deuxième position de nettoyage, et
• les éléments filtrants (6) étant réalisés de façon à former dans la première position de filtrage une surface d'enveloppe cylindrique traversée par l'eau de lavage en circulation dans le système de conduites, et à pivoter hors de la surface d'enveloppe dans la deuxième position de nettoyage, de sorte que le gâteau de filtrage puisse se détacher de la surface des éléments filtrants (6) et être évacué, par exemple au moyen d'une pompe à lessive, dans un système d'évacuation des eaux usées, côté bâtiment.
